(19) **Europäisches Patentamt / European Patent Office / Office européen des brevets**

(11) **EP 4 723 230 A1**

(12) **EUROPEAN PATENT APPLICATION**
published in accordance with Art. 153(4) EPC

(43) Date of publication:
08.04.2026 Bulletin 2026/15

(21) Application number: 24835260.1

(22) Date of filing: 25.06.2024

(51) International Patent Classification (IPC):
$H01M\ 4/525^{(2010.01)}$  $H01M\ 10/054^{(2010.01)}$
$H01M\ 4/62^{(2006.01)}$

(52) Cooperative Patent Classification (CPC):
Y02E 60/10

(86) International application number:
PCT/CN2024/101459

(87) International publication number:
WO 2025/007779 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 06.07.2023 CN 202310825219

(71) Applicant: Ningbo Ronbay New Energy
Technology Co., Ltd.
Yuyao Ningbo, Zhejiang 315402 (CN)

(72) Inventors:
• XUE, Zhigao
Ningbo, Zhejiang 315402 (CN)

• WU, Zengxue
Ningbo, Zhejiang 315402 (CN)
• SUN, Weili
Ningbo, Zhejiang 315402 (CN)
• WANG, Zunzhi
Ningbo, Zhejiang 315402 (CN)
• LIU, Rui
Ningbo, Zhejiang 315402 (CN)
• LEE, Jonghee
Ningbo, Zhejiang 315402 (CN)

(74) Representative: Bandpay & Greuter
11, rue Christophe Colomb
75008 Paris (FR)

(54) **POSITIVE ELECTRODE ACTIVE MATERIAL AND PREPARATION METHOD THEREFOR, POSITIVE ELECTRODE SHEET, AND SODIUM-ION BATTERY**

(57) A positive electrode material, a preparation method thereof, a positive electrode sheet, and a sodium-ion battery are provided. The positive electrode active material has a chemical formula of $Na_xA_yNi_aFe_bMn_cCu_dA_eO_n$, where A is selected from at least one of Zn, Mg, Ca, K, and Li, and the following conditions are satisfied: (1) $0.67 \leq x \leq 0.85$, $0.01 \leq y \leq 0.2$, and $x + y \leq 1$; (2) $0.11 \leq a \leq 0.33$, $0.11 \leq b \leq 0.33$, $0.33 \leq c \leq 0.66$, $0.11 \leq d < 0.33$, $0 \leq e \leq 0.1$, and $a + b + c + d = 1$; (3) n satisfies that an algebraic sum of positive and negative valences in the chemical formula equals zero; under same values of x, a, b, c, d, and n, a sodium layer spacing in an unit cell of the positive electrode active material is reduced by 0.005 Å - 0.115 Å compared to that of $Na_xNi_aFe_bMn_cCu_dO_n$. The positive electrode active material exhibits high rate performance, excellent cycling stability, and high-voltage durability, etc., and thus a resulting sodium-ion battery has excellent performance.

FIG. 1

EP 4 723 230 A1

# EP 4 723 230 A1

## Description

This application claims priority to Chinese patent application No. 202310825219.4, filed with the China National Intellectual Property Administration on July 6, 2023, entitled "Positive Electrode Active Material and Preparation Method Thereof, Positive Electrode Sheet, and Sodium-Ion Battery", which is hereby incorporated by reference in its entirety.

## TECHNICAL FIELD

This present invention relates to the technology field of sodium-ion batteries and, in particular, to a positive electrode active material and a preparation method thereof, a positive electrode sheet, and a sodium-ion battery.

## BACKGROUND

Sodium-ion batteries are gradually applied in commercial fields based on their low cost and considerable capacity. In particular, positive electrode active materials, as core components of batteries, determine both cost and electrochemical performance of batteries. Similar to lithium-ion batteries, positive electrode active materials for sodium-ion batteries mainly include layered oxides and polyanions. Among them, layered oxides are considered as preferred positive electrode active materials for sodium-ion batteries due to their high specific capacity, low preparation cost, and high production yield.

However, in sodium-ion batteries, sodium layered oxides, due to their low structural stability, are prone to sodium ion deintercalation and subsequent deposition, resulting in lattice distortion or collapse during long cycling. This significantly affects the stability of sodium-ion batteries. Therefore, it is necessary to seek a positive electrode active material for sodium-ion batteries that can enhance structural stability and improve performance.

## SUMMARY

In view of the above, it is necessary to provide a positive electrode active material and a preparation method thereof, a positive electrode sheet, and a sodium-ion battery to address the above problems. The positive electrode active material exhibits high-rate performance, excellent cycling stability, and high-voltage durability, etc., and thus a resulting sodium-ion battery has excellent performance.

A positive electrode active material is provided, which has a chemical formula of $Na_xA_yNi_aFe_bMn_cCu_dA_eO_n$, where A is selected from at least one of Zn, Mg, Ca, K, and Li, and the following conditions are satisfied: (1) $0.67 \leq x \leq 0.85$, $0.01 \leq y \leq 0.2$, and $x + y \leq 1$; (2) $0.11 \leq a \leq 0.33$, $0.11 \leq b \leq 0.33$, $0.33 \leq c \leq 0.66$, $0.11 \leq d \leq 0.33$, $0 \leq e \leq 0.1$, and $a + b + c + d = 1$; (3) n satisfies that an algebraic sum of positive and negative valences in the chemical formula equals zero; under same values of x, a, b, c, d, and n, a sodium layer spacing in an unit cell of the positive electrode active material is reduced by 0.005Å - 0.115Å compared to that of $Na_xNi_aFe_bMn_cCu_dO_n$.

In one embodiment, $0.001 \leq e \leq 0.1$.

In one embodiment, $y > e$.

In one embodiment, the sodium layer spacing in the unit cell of the positive electrode active material is 3.20 Å - 3.45 Å.

In one embodiment, a transition-metal layer spacing in the unit cell of the positive electrode active material is 2.03 Å - 2.10 Å.

In one embodiment, an absolute value of a volume change ratio of the unit cell of the positive electrode active material is less than or equal to 2.5% within a voltage condition of less than or equal to 4.4 V.

In one embodiment, the positive electrode active material is a single crystal or a secondary particle.

A method for preparing the positive electrode active material as described above includes the following steps: preparing a nickel-manganese-iron-copper oxide in a molar ratio of Ni:Fe:Mn:Cu = a:b:c:d, where $0.11 \leq a \leq 0.33$, $0.11 \leq b \leq 0.33$, $0.33 \leq c \leq 0.66$, $0.11 \leq d \leq 0.33$, and $a + b + c + d = 1$; subjecting the nickel-manganese-iron-copper oxide, a sodium source, and a doping source to mixing based on $Na_xA_yNi_aFe_bMn_cCu_dA_eO_n$, $0.67 \leq x \leq 0.85$, $0.01 \leq y \leq 0.2$, $0 \leq e \leq 0.1$, and $x + y \leq 1$ and then sintering to obtain the positive electrode active material, where the doping source is selected from at least one of a zinc source, a magnesium source, a calcium source, a potassium source, and a lithium source.

In one embodiment, the sodium source is selected from at least one of sodium carbonate, sodium bicarbonate, and sodium hydroxide; and/or the zinc source is zinc oxide; and/or the magnesium source is selected from at least one of magnesium oxide and magnesium hydroxide; and/or the calcium source is selected from at least one of calcium oxide and calcium carbonate; and/or the potassium source is selected from at least one of potassium oxide, potassium carbonate, potassium hydroxide, and potassium bicarbonate; and/or the lithium source is selected from at least one of lithium oxide, lithium hydroxide, and lithium carbonate.

In one embodiment, in the step of the subjecting the nickel-manganese-iron-copper oxide, the sodium source, and the doping source to the mixing and then the sintering, sintering temperature is 800 °C - 1200 °C, heating rate is 1 °C/min - 5 °C/min, and sintering time is 8 hours - 16 hours.

A positive electrode sheet is provided, including a positive current collector and a positive electrode material layer provided on a surface of the positive current collector, where the positive electrode material layer includes the positive electrode active material as described above.

A sodium-ion battery is provided, including the positive electrode sheet as described above.

For the positive electrode active material according to the present invention, by the selection of the doping element A and the adjustment of its ratio in a sodium layered oxide, the inactive cation A enters cation defect sites in the sodium layered oxide, under a synergistic effect of the doping element A at a specific ratio together with Na, Ni, Fe, Mn, and Cu. This reduces a sodium layer spacing. Moreover, the inactive cation A neither migrate nor deintercalate from the sodium layer during charging and discharging processes, thereby providing effective support to the sodium layer structure and preventing structural collapse caused by the deintercalation of excessive sodium ions. This achieves the effect of enhancing the structural stability of the positive electrode active material and maintains the high-rate performance thereof. In addition, when an excessive amount of the inactive cation A is doped into the sodium layer, the excessive amount of the inactive cation A diffuses and fills into a transition metal layer, resulting in that e is greater than 0. By controlling a doping atomic amount of the inactive cation A in the transition metal layer to within 10%, not only may excessive dissolution of a host metal in the transition metal layer be prevented, but also an entropy of the positive electrode active material can be increased, therefore, the structural stability of the positive electrode active material is further enhanced.

Therefore, the positive electrode active material according to the present invention exhibits high-rate capability, excellent cycling stability, and high-voltage durability. When the positive electrode active material is used in the preparation of a positive electrode sheet and the assembling of a sodium-ion battery, a sodium-ion battery may achieve a capacity retention ratio of 30% - 80% at 20 C compared to that at 0.1 C within a voltage window of 2 V - 4.4 V, and the capacity retention ratio is as high as above 90% after 300 cycles at 10 C.

## BRIEF DESCRIPTION OF DRAWINGS

FIG. 1 is a XRD pattern of a positive electrode active material prepared in Example 4 of the present invention.
FIG. 2 is a XRD pattern of a positive electrode active material prepared in Example 5 of the present invention.
FIG. 3 is a XRD pattern of a positive electrode active material prepared in Example 7 of the present invention.

## DESCRIPTION OF EMBODIMENTS

In order to facilitate a better understanding of the present invention, the following provides a more detailed description of the present invention. However, it should be understood that the present invention may be implemented in many different forms and is not limited to embodiments or examples described herein. Rather, the purpose of providing these embodiments or examples is to make the disclosure of the present invention completer and more comprehensive.

Unless otherwise defined, all technical and scientific terms used herein have the same meaning as commonly understood by those skilled in the art to which the present invention pertains. The terms used herein are for the purpose of describing embodiments or examples only and are not intended to limit the present invention.

The present invention provides a positive electrode active material, its chemical formula is $Na_xA_yNi_aFe_bMn_cCu_dA_eO_n$, where A is selected from at least one of Zn, Mg, Ca, K, and Li, and the following conditions are satisfied: (1) $0.67 \leq x \leq 0.85$, $0.01 \leq y \leq 0.2$, and $x + y \leq 1$; (2) $0.11 \leq a \leq 0.33$, $0.11 \leq b \leq 0.33$, $0.33 \leq c \leq 0.66$, $0.11 \leq d \leq 0.33$, $0 \leq e \leq 0.1$, and $a + b + c + d = 1$; (3) n satisfies that an algebraic sum of positive and negative valences in the chemical formula equals zero; under same values of x, a, b, c, d, and n, a sodium layer spacing in an unit cell of the positive electrode active material is reduced by 0.005 - 0.115 Å compared to that of $Na_xNi_aFe_bMn_cCu_dO_n$.

In the positive electrode active material, a sodium layer has a large number of controllable cationic defects compared to a transition metal layer. Therefore, the sodium layer exhibits a higher doping capacity than the nearly fully occupied transition metal layer. By the selection of the doping element A and the adjustment of its ratio in a sodium layered oxide, the inactive cation A enters cation defect sites in the sodium layered oxide, under a synergistic effect of the doping element A at a specific ratio together with Na, Ni, Fe, Mn, and Cu. This reduces a sodium layer spacing. Moreover, the inactive cation A neither migrate nor deintercalate from the sodium layer during charging and discharging processes, thereby providing effective support to the sodium layer structure and preventing structural collapse caused by the deintercalation of excessive sodium ions. This achieves the effect of enhancing the structural stability of the positive electrode active material and maintains the high-rate performance thereof.

It should be noted that due to the randomness in the generation of sodium vacancies, the sodium vacancies are mainly distributed in a disordered manner, the doping of the inactive cation A in the sodium layer is also predominantly disordered.

When an excessive amount of the inactive cation A is doped into the sodium layer, the excessive amount of the inactive cation A diffuses and fills into the transition metal layer, resulting in that e is greater than 0. By controlling the doping atomic amount of the inactive cation A in the transition metal layer to within 10%, not only may excessive dissolution of a host metal from the transition metal layer be prevented, but also an entropy of the positive electrode active material can be increased, and thus the structural stability of the positive electrode active material is further enhanced.

Preferably, $0.001 \leq e \leq 0.1$; further preferably, $0.001 \leq e \leq 0.05$; and more preferably, $0.03 \leq e \leq 0.05$, which enables the positive electrode active material to exhibit excellent stability.

Preferably, $y > e$, meaning that an atomic amount of the inactive cation A doped in the sodium layer is higher than that in the transition metal layer. This is more conducive to maintaining high-rate performance while avoiding excessive dissolution of the host metal in the transition metal layer, thereby further enhancing the structural stability of the positive electrode active material.

Preferably, the sodium layer spacing in the unit cell of the positive electrode active material is 3.20 Å - 3.45 Å, ensuring the deintercalation of sodium ions and ensuring the positive electrode active material to maintain excellent electrochemical performance.

Preferably, the sodium layer spacing in the unit cell of the positive electrode active material is 2.03 Å - 2.10 Å, ensuring the compactness of the transition metal layer and minimizing the dissolution of a transition metal.

Preferably, the positive electrode active material is a single crystal or a secondary particle, where the secondary particle is formed by the agglomeration of primary particles, and the primary particles are irregular particles or spherical-like particles.

Therefore, the positive electrode active material according to the present invention not only exhibits excellent cycling stability, where an absolute value of a volume change ratio of the unit cell is less than or equal to 2.5% under a condition that a voltage is less than or equal to 4.4 V, but also has high-rate performance and high-voltage durability. The positive electrode active material may be used in the preparation of a positive electrode sheet and the assembling of a sodium-ion battery.

The invention provides a method for preparing the positive electrode active material as described above, including the following steps:

step 1: preparing a nickel-manganese-iron-copper oxide in a molar ratio of Ni:Fe:Mn:Cu = a:b:c:d, where $0.11 \leq a \leq 0.33$, $0.11 \leq b \leq 0.33$, $0.33 \leq c \leq 0.66$, $0.11 \leq d \leq 0.33$, and $a + b + c + d = 1$;
step 2: subjecting the nickel-manganese-iron-copper oxide, a sodium source and a doping source to mixing based on $Na_xA_yNi_aFe_bMn_cCu_dA_eO_n$, $0.67 \leq x \leq 0.85$, $0.01 \leq y \leq 0.2$, $0 \leq e \leq 0.1$, and $x + y \leq 1$ and then sintering to obtain the positive electrode active material, where the doping source is selected from at least one of a zinc source, a magnesium source, a calcium source, a potassium source, and a lithium source.

In step S1, the method for preparing the nickel-manganese-iron-copper oxide includes: subjecting a nickel source, an iron source, a manganese source, and a copper source to mixing and then sintering; or directly sintering a nickel-manganese-iron-copper carbonate precursor or a nickel-manganese-iron-copper hydroxide precursor.

Specifically, the nickel source is selected from at least one of nickel oxide, nickel (III) oxide, and nickel hydroxide; the iron source is selected from at least one of iron oxide, ferrosoferric oxide, ferrous oxide, and iron nitrate; the manganese source is selected from at least one of manganese carbonate, manganese acetate, manganese sesquioxide, and trimanganese tetraoxide; and the copper source is selected from at least one of copper oxide and copper hydroxide.

Preferably, in the step of preparing the nickel-manganese-iron-copper oxide, sintering temperature is 400 °C - 800 °C, heating rate is 1 °C/min - 5 °C/min, and sintering time is 2 hours - 8 hours.

In step S2, by adjusting a ratio of the nickel-manganese-iron-copper oxide to the sodium source and the doping source, the inactive cation A may enter only cationic defect sites in the sodium layer, thereby forming a layered oxide doped in the sodium layer. Alternatively, an excessive amount of the inactive cation A is doped in the sodium layer, and the excessive amount of the inactive cation A diffuses and fills into the transition metal layer, thereby forming the layered oxide doped in both the sodium layer and the transition metal layer.

Specifically, the sodium source is selected from at least one of sodium carbonate, sodium bicarbonate, sodium hydroxide, sodium oxide, and sodium peroxide, preferably at least one of sodium carbonate, sodium bicarbonate, and sodium hydroxide.

The zinc source is selected from at least one of zinc oxide, zinc carbonate, zinc hydroxide, and zinc chloride, preferably zinc oxide.

The magnesium source is selected from at least one of magnesium oxide, magnesium hydroxide, magnesium carbonate, and magnesium chloride, preferably at least one of magnesium oxide and magnesium hydroxide.

The calcium source is selected from at least one of calcium oxide, calcium carbonate, calcium hydroxide, and calcium chloride, preferably at least one of calcium oxide and calcium carbonate.

The potassium source is selected from at least one of potassium oxide, potassium carbonate, potassium hydroxide, potassium bicarbonate, and potassium chloride, preferably at least one of potassium oxide, potassium carbonate, potassium hydroxide, and potassium bicarbonate.

The lithium source is selected from at least one of lithium oxide, lithium hydroxide, lithium carbonate, and lithium chloride, preferably at least one of lithium oxide, lithium hydroxide, and lithium carbonate.

In one embodiment, in the step of subjecting the nickel-manganese-iron-copper oxide, the sodium source, and the doping source to mixing and then sintering, the sintering temperature is 800 °C - 1200 °C, the heating rate is 1 °C/min - 5 °C/min, and the sintering time is 8 hours-16 hours.

The present invention provides a positive electrode sheet, including a positive current collector and a positive electrode material layer provided on a surface of the positive current collector, where the positive electrode material layer includes the positive electrode active material as described above.

In one embodiment, the positive electrode material layer further includes a conductive agent and a binder.

The present invention further provides a sodium-ion battery, including the positive electrode sheet as described above.

In one embodiment, the sodium-ion battery further includes a negative electrode plate, a separator, and an electrolyte solution.

The sodium-ion battery according to the present invention exhibits excellent performance. Within a voltage window of 2 V - 4.4 V, the sodium-ion battery achieves a capacity retention ratio of 30% to 80% at 20 C compared to that at 0.1 C, and the capacity retention ratio is as high as above 90% after 300 cycles at 10 C.

In the following, the positive electrode active material, the preparation method thereof, the positive electrode sheet, and the sodium-ion battery will be further described through the following specific examples.

Example 1

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and zinc oxide are uniformly mixed in an elemental molar ratio of Na:Zn:Ni:Fe:Mn:Cu = 0.85:0.01:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Zn_{0.01}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.018 Å compared to a sodium layer spacing in a unit cell of $Na_{0.85}Ni_{0.12}Fe_{0.28}Mn_{0.48}Cu_{0.12}O_2$.

Example 2

Nickel oxide, ferroferric oxide, dimanganese trioxide, and copper oxide are uniformly mixed in an elemental molar ratio of Ni:Fe:Mn:Cu = 0.12:0.28:0.48:0.12, and sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and zinc oxide are uniformly mixed in an elemental molar ratio of Na:Zn:Ni:Fe:Mn:Cu = 0.85:0.05:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure and then performing calculation using a Rietveld refinement method of XRD, it can be confirmed the chemical formula of the prepared positive electrode active material is $Na_{0.85}Zn_{0.05}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.049 Å compared to a sodium layer spacing in a unit cell of $Na_{0.85}Ni_{0.12}Fe_{0.28}Mn_{0.48}Cu_{0.12}O_2$.

Example 3

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and zinc oxide are uniformly mixed in an elemental molar ratio of Na:Zn:Ni:Fe:Mn:Cu = 0.85:0.1:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure and then performing calculation using a Rietveld refinement method of XRD, it can be confirmed that the chemical formula of the prepared positive electrode active material is $Na_{0.85}Zn_{0.1}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.086 Å compared to a sodium layer spacing in a unit cell of $Na_{0.85}Ni_{0.12}Fe_{0.28}Mn_{0.48}Cu_{0.12}O_2$.

Example 4

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and zinc oxide are uniformly mixed in an elemental molar ratio of Na:Zn:Ni:Fe:Mn:Cu = 0.85:0.15:0.12:0.28:0.48:0.12, and then sintered at 950 °C for 12 hours at a heating rate of 5 °C/min, and then cooled to room temperature to obtain a positive electrode active material.

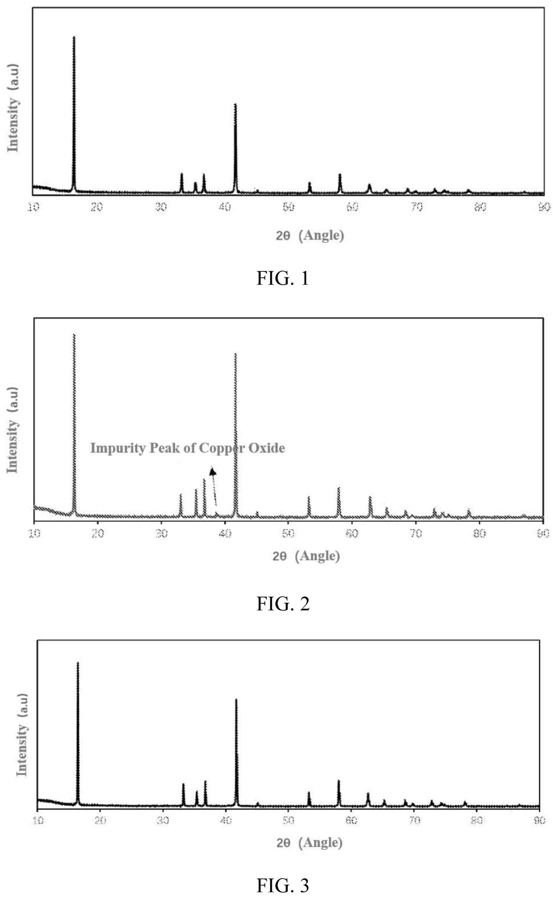

After performing Gaussian transformation of a XRD pattern of a simulated structure and then performing calculation using a Rietveld refinement method of XRD, it can be confirmed that the chemical formula of the prepared positive electrode active material is $Na_{0.85}Zn_{0.15}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.109 Å compared to a sodium layer spacing in a unit cell of $Na_{0.85}Ni_{0.12}Fe_{0.28}Mn_{0.48}Cu_{0.12}O_2$. The prepared positive electrode active material is measured by XRD, and the result is shown in FIG. 1.

Example 5

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and zinc oxide are uniformly mixed in an elemental molar ratio of Na:Zn:Ni:Fe:Mn:Cu = 0.85:0.18:0.12:0.28:0.48:0.12, and then sintered at 950 °C for 12 hours at a heating rate of 5 °C/min, and then cooled to room temperature to obtain a positive electrode active material.

The prepared positive electrode active material is measured by XRD, and the result is showed in FIG 2. From the comparison between FIG 1 and FIG 2, it can be seen that the positive electrode active material prepared in Example 5 exhibits one weak impurity peak of copper oxide compared to the positive electrode active material prepared in Example 4, indicating that a small amount of copper is dissolved from the transition metal layer. After performing Gaussian transformation of a XRD pattern of a simulated structure and then performing calculation using a Rietveld refinement method of XRD, it can be confirmed that the chemical formula of the prepared positive electrode active material is $Na_{0.85}Zn_{0.15}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.111 Å compared to a sodium layer spacing in a unit cell of $Na_{0.85}Ni_{0.12}Fe_{0.28}Mn_{0.48}Cu_{0.12}O_2$.

Example 6

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and zinc oxide are uniformly mixed in an elemental molar ratio of Na:Zn:Ni:Fe:Mn:Cu = 0.85:0.22:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Zn_{0.15}Ni_{0.12}Fe_{0.28}Mn_{0.48}Cu_{0.12}Zn_{0.07}O_2$, which is consistent with a designed value. Additionally, a sodium layer spacing in a unit cell of the positive electrode active material prepared in this example, which is measured by XRD, is reduced by 0.110 Å compared to a sodium layer spacing in a unit cell of $Na_{0.85}Ni_{0.12}Fe_{0.28}Mn_{0.48}Cu_{0.12}O_2$.

Example 7

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and magnesium oxide are uniformly mixed in an elemental molar ratio of Na:Mg:Ni:Fe:Mn:Cu = 0.85:0.01:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Mg_{0.01}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.009 Å compared to a sodium layer spacing in a unit cell of $Na_{0.85}Ni_{0.12}Fe_{0.28}Mn_{0.48}Cu_{0.12}O_2$. The prepared positive electrode active material is measured by XRD, and the result is showed in FIG 3.

Example 8

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and magnesium oxide are uniformly mixed in an elemental molar ratio of Na:Mg:Ni:Fe:Mn:Cu = 0.85:0.05:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Mg_{0.05}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.036 Å compared to a sodium layer spacing in a unit cell of $Na_{0.85}Ni_{0.12}Fe_{0.28}Mn_{0.48}Cu_{0.12}O_2$.

Example 9

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and magnesium oxide are uniformly mixed in an elemental molar ratio of Na:Mg:Ni:Fe:Mn:Cu = 0.85:0.1:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Mg_{0.1}Ni_{0.12}Fe_{0.28}Mn_{0.48}Cu_{0.12}O_2$, which is consistent with a designed value. Additionally, a sodium layer spacing in a unit cell of the positive electrode active material prepared in this example, which is measured by XRD, is reduced by 0.079 Å compared to a sodium layer spacing in a unit cell of $Na_{0.85}Ni_{0.12}Fe_{0.28}Mn_{0.48}Cu_{0.12}O_2$.

Example 10

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and magnesium oxide are uniformly mixed in an elemental molar ratio of Na:Mg:Ni:Fe:Mn:Cu = 0.85:0.15:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Mg_{0.15}Ni_{0.12}Fe_{0.28}Mn_{0.48}Cu_{0.12}O_2$, which is consistent with a designed value. Additionally, a sodium layer spacing in a unit cell of the positive electrode active

**EP 4 723 230 A1**

material prepared in this example, which is measured by XRD, is reduced by 0.096 Å compared to a sodium layer spacing in a unit cell of $Na_{0.85}Ni_{0.12}Fe_{0.28}Mn_{0.48}Cu_{0.12}O_2$.

Example 11

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and magnesium oxide are uniformly mixed in an elemental molar ratio of Na:Mg:Ni:Fe:Mn:Cu = 0.85:0.18:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Mg_{0.15}Ni_{0.12}Fe_{0.28}Mn_{0.48}Cu_{0.12}Mg_{0.03}O_2$, which is consistent with a designed value. Additionally, a sodium layer spacing in a unit cell of the positive electrode active material prepared in this example, which is measured by XRD, is reduced by 0.098 Å compared to a sodium layer spacing in a unit cell of $Na_{0.85}Ni_{0.12}Fe_{0.28}Mn_{0.48}Cu_{0.12}O_2$.

Example 12

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and magnesium oxide are uniformly mixed in an elemental molar ratio of Na:Mg:Ni:Fe:Mn:Cu = 0.85:0.22:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Mg_{0.15}Ni_{0.12}Fe_{0.28}Mn_{0.48}Cu_{0.12}Mg_{0.07}O_2$, which is consistent with a designed value. Additionally, a sodium layer spacing in a unit cell of the positive electrode active material prepared in this example, which is measured by XRD, is reduced by 0.095 Å compared to a sodium layer spacing in a unit cell of $Na_{0.85}Ni_{0.12}Fe_{0.28}Mn_{0.48}Cu_{0.12}O_2$.

Example 13

Nickel hydroxide, ferroferric oxide, manganese carbonate, and copper oxide are uniformly mixed in an elemental molar ratio of Ni:Fe:Mn:Cu = 0.11:0.11:0.66:0.12, and then sintered at 700 °C for 4 hours at a heating rate of 2 °C/min, and then cooled to room temperature to obtain a nickel-manganese-iron-copper oxide.

The nickel-manganese-iron-copper oxide, sodium bicarbonate, and calcium oxide are uniformly mixed in an elemental molar ratio of Na:Ca:Ni:Fe:Mn:Cu = 0.8:0.3:0.11:0.11:0.66:0.12, and then sintered at 1000 °C for 10 hours at a heating rate of 2 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.8}Ca_{0.2}Ni_{0.11}Fe_{0.11}Mn_{0.66}Cu_{0.12}Ca_{0.1}O_2$, which is consistent with a designed value. Additionally, a sodium layer spacing in a unit cell of the positive electrode active material prepared in this example, which is measured by XRD, is reduced by 0.03 Å compared to a sodium layer spacing in a unit cell of $Na_{0.8}Ni_{0.11}Fe_{0.11}Mn_{0.66}Cu_{0.12}O_2$.

Example 14

Nickel oxide, ferroferric oxide, dimanganese trioxide, and copper oxide are uniformly mixed in an elemental molar ratio of Ni:Fe:Mn:Cu = 0.33:0.12:0.33:0.22, and then sintered at 600 °C for 8 hours at a heating rate of 3 °C/min, and then cooled to room temperature to obtain a nickel-manganese-iron-copper oxide.

The nickel-manganese-iron-copper oxide, sodium carbonate, and potassium carbonate are uniformly mixed in an elemental molar ratio of Na:K:Ni:Fe:Mn:Cu = 0.8:0.25:0.33:0.12:0.33:0.22, and then sintered at 900 °C for 14 hours at a heating rate of 2 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed

8

that the chemical formula of the prepared positive electrode active material is $Na_{0.8}K_{0.2}Ni_{0.33}Fe_{0.12}Mn_{0.33}Cu_{0.22}k_{0.05}O_2$, which is consistent with a designed value. Additionally, a sodium layer spacing in a unit cell of the positive electrode active material prepared in this example, which is measured by XRD, is reduced by 0.025 Å compared to a sodium layer spacing in a unit cell of $Na_{0.8}Ni_{0.33}Fe_{0.12}Mn_{0.33}Cu_{0.22}O_2$.

Example 15

Nickel oxide, ferroferric oxide, dimanganese trioxide, and copper oxide are uniformly mixed in an elemental molar ratio of Ni:Fe:Mn:Cu = 0.23:0.33:0.33:0.11, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and lithium carbonate are uniformly mixed in an elemental molar ratio of Na:Li:Ni:Fe:Mn:Cu = 0.8:0.201:0.23:0.33:0.33:0.11, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.8}Li_{0.2}Ni_{0.23}Fe_{0.33}Mn_{0.33}Cu_{0.11}Li_{0.001}O_2$, which is consistent with a designed value. Additionally, a sodium layer spacing in a unit cell of the positive electrode active material prepared in this example, which is measured by XRD, is reduced by 0.012 Å compared to a sodium layer spacing in a unit cell of $Na_{0.8}Ni_{0.23}Fe_{0.33}Mn_{0.33}Cu_{0.11}O_2$.

Example 16

Nickel oxide, ferroferric oxide, dimanganese trioxide, and copper oxide are uniformly mixed in an elemental molar ratio of Ni:Fe:Mn:Cu = 0.14:0.2:0.33:0.33, and then sintered at 650 °C for 6 hours at a heating rate of 2 °C/min, and then cooled to room temperature to obtain a nickel-manganese-iron-copper oxide.

The nickel-manganese-iron-copper oxide, sodium carbonate, and lithium carbonate are uniformly mixed in an elemental molar ratio of Na:Li:Ni:Fe:Mn:Cu = 0.67:0.2:0.14:0.2:0.33:0.33, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.67}Li_{0.2}Ni_{0.14}Fe_{0.2}Mn_{0.33}Cu_{0.33}O_2$, which is consistent with a designed value. Additionally, a sodium layer spacing in a unit cell of the positive electrode active material prepared in this example, which is measured by XRD, is reduced by 0.058 Å compared to a sodium layer spacing in a unit cell of $Na_{0.67}Ni_{0.14}Fe_{0.2}Mn_{0.33}Cu_{0.33}O_2$.

Comparative Example 1

Nickel oxide, ferroferric oxide, dimanganese trioxide, and copper oxide are uniformly mixed in an elemental molar ratio of Ni:Fe:Mn:Cu = 0.12:0.28:0.48:0.12, and then sintered at 650 °C for 6 hours at a heating rate of 2 °C/min, and then cooled to room temperature to obtain a nickel-manganese-iron-copper oxide.

The nickel-manganese-iron-copper oxide, and sodium carbonate are uniformly mixed in an elemental molar ratio of Na:Ni:Fe:Mn:Cu=0.85:0.12:0.28:0.48:0.12, and then sintered at 950 °C for 12 hours at a heating rate of 5 °C/min, and then cooled to room temperature to obtain a positive electrode active material.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Ni_{0.12}Fe_{0.28}Mn_{0.48}Cu_{0.12}O_2$, which is consistent with a designed value. Additionally, a sodium layer spacing in a unit cell of the positive electrode active material, as measured by XRD, is 3.421 Å.

Comparative Example 2

Comparative Example 2 differs from Example 4 in that the nickel-manganese-iron-copper oxide, sodium carbonate, and zinc oxide are uniformly mixed in an elemental molar ratio of Na:Zn:Ni:Fe:Mn:Cu = 0.7:0.3:0.12:0.28:0.48:0.12, and then sintered.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.7}Zn_{0.3}Ni_{0.12}Fe_{0.28}Mn_{0.48}Cu_{0.12}O_2$, which is consistent with a designed value. Additionally, a sodium layer spacing in a unit cell of the positive electrode active material, as measured by XRD, is 3.521 Å.

Comparative Example 3

Comparative Example 3 differs from Example 5 in that the nickel-manganese-iron-copper oxide, sodium carbonate, and zinc oxide are uniformly mixed in an elemental molar ratio of Na:Zn:Ni:Fe:Mn:Cu = 0.85:0.35:0.12:0.28:0.48:0.12, and then sintered.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Zn_{0.15}Ni_{0.12}Fe_{0.28}Mn_{0.48}Cu_{0.12}O_2$, which is consistent with a designed value. Additionally, a sodium layer spacing in a unit cell of the positive electrode active material, as measured by XRD, is 3.310 Å.

Comparative Example 4

Comparative Example 4 differs from Example 1 in that nickel oxide, ferroferric oxide, dimanganese trioxide, and copper oxide are uniformly mixed in an elemental molar ratio of Ni:Fe:Mn:Cu = 0.4:0.4:0.2:0.4, and then sintered.

After performing Gaussian transformation of a XRD pattern of a simulated structure of the prepared positive electrode active material and then performing calculation using a Rietveld refinement method of XRD, it can be confirmed that the chemical formula of the prepared positive electrode active material is $Na_{0.85}Zn_{0.01}Ni_{0.4}Fe_{0.4}Mn_{0.2}Cu_{0.4}O_2$, which is consistent with a designed value. Additionally, a sodium layer spacing in a unit cell of the positive electrode active material, as measured by XRD, is 3.402 Å.

The positive electrode active materials obtained from Examples 1 to 16 and Comparative Examples 1 to 4 are measured by XRD, sodium layer spacings ($d_{(O-Na-O)}$) and transition metal layer spacings ($d_{(O-TM-O)}$) are obtained and showed in Table 1.

Table 1

| | $d_{(O-N-O)}$/(Å) | $d_{(O-TM-O)}$/(Å) |
|---|---|---|
| Example 1 | 3.403 | 2.0541 |
| Example 2 | 3.372 | 2.0544 |
| Example 3 | 3.335 | 2.0537 |
| Example 4 | 3.312 | 2.0532 |
| Example 5 | 3.310 | 2.0541 |
| Example 6 | 3.311 | 2.0612 |
| Example 7 | 3.412 | 2.0542 |
| Example 8 | 3.385 | 2.0543 |
| Example 9 | 3.342 | 2.0539 |
| Example 10 | 3.325 | 2.0541 |
| Example 11 | 3.323 | 2.0558 |
| Example 12 | 3.326 | 2.0728 |
| Example 13 | 3.295 | 2.0785 |
| Example 14 | 3.297 | 2.0701 |
| Example 15 | 3.301 | 2.0564 |
| Example 16 | 3.325 | 2.0543 |
| Comparative Example 1 | 3.421 | 2.0540 |
| Comparative Example 2 | 3.521 | 2.0498 |
| Comparative Example 3 | 3.310 | 2.0851 |
| Comparative Example 4 | 3.402 | 2.0544 |

According to Table 1, compared with Comparative Example 1, the sodium layer spacing of each of the positive electrode active materials prepared in Examples 1 to 12 is reduced by 0.005 Å to 0.115 Å due to the doping of inactive cations into the sodium layer. Furthermore, from the comparison between Examples 4 to 6 and the comparison between Examples 10 to 12, it can be seen that the doping of inactive cations into the transition metal layer may cause an increase in the transition metal layer spacing.

Application Example

The positive electrode active materials prepared in Examples 1 to 16 are used to prepare sodium-ion battery samples 1 to 16, respectively.

Comparative application Example

The positive electrode active materials prepared in Comparative Examples 1 to 4 are used to prepare sodium-ion battery samples 17 to 20, respectively.

All of the above samples are prepared using the same preparation method. The specific steps include: mixing the positive electrode active material, ketjen black, and a binder PVDF in a mass ratio of 90:5:5; adding an appropriate amount of a NMP solution to form a slurry; coating the slurry onto an aluminum foil; drying and then baking the slurry in a vacuum oven at 120 °C for 12 hours; and assembling a battery in a dry room, in which a metallic sodium foil as a negative electrode is used, and an electrolyte solution in which 1 mol/L of $NaPF_6$ is dissolved in a mixed organic solvent having a volume ratio of EC:EMC = 46 is used, and thus the sodium-ion battery is assembled.

Using a constant current charge-discharge mode, within a voltage window of 2V - 4.4V, a first-cycle charge-discharge test at 0.1C and a rate performance test of 20C/0.1C are performed, and a 300-cycle test is performed at 10C, electrochemical performance results tested are showed in Table 2. A volume of the unit cell and a volume change ration of the unit cell of each of the positive electrode active materials before and after 300 cycles are showed in Table 3.

Table 2

| | Discharge specific capacity after first cycle (mAh/g) | 20C/0.1C (%) | Capacity retention ratio after 300 cycles (%) |
|---|---|---|---|
| Sample 1 | 175 | 35.3 | 92.3 |
| Sample 2 | 174 | 51.3 | 95.7 |
| Sample 3 | 172 | 73.7 | 98.9 |
| Sample 4 | 170 | 68.2 | 97.6 |
| Sample 5 | 171 | 75.1 | 99.2 |
| Sample 6 | 165 | 52.6 | 90.2 |
| Sample 7 | 175 | 37.0 | 93.5 |
| Sample 8 | 173 | 56.6 | 94.6 |
| Sample 9 | 171 | 82.0 | 99.5 |
| Sample 10 | 170 | 70.8 | 97.6 |
| Sample 11 | 170 | 83.2 | 99.6 |
| Sample 12 | 164 | 61.1 | 94.1 |
| Sample 13 | 158 | 55.0 | 90.2 |
| Sample 14 | 159 | 49.8 | 90.4 |
| Sample 15 | 155 | 44.5 | 95.7 |
| Sample 16 | 148 | 65.7 | 98.7 |
| Sample 17 | 175 | 30.5 | 89.1 |
| Sample 18 | 135 | 65 | 89.5 |
| Sample 19 | 168 | 28 | 84.5 |
| Sample 20 | 174 | 35.7 | 88.2 |

According to Table 2, compared with Samples 17 to 20, Samples 1 to 16 exhibit capacity retention ratios of 30% to 80% at 20 C relative to that at 0.1 C within a voltage window of 2 V - 4.4 V. Furthermore, after 300 cycles at 10 C, the capacity retention ratios of these samples are as high as above 90%. Therefore, sodium-ion batteries prepared using the positive electrode active materials according to the present invention exhibit more excellent performance.

Table 3

|  | $V_1$ (Å³) | $V_2$ (Å³) | $\Delta w$ (%) |
|---|---|---|---|
| Example 1 | 122.8008 | 125.8231 | 2.46 |
| Example 2 | 122.7521 | 124.2198 | 1.20 |
| Example 3 | 122.6123 | 123.1153 | 0.41 |
| Example 4 | 122.5682 | 123.0465 | 0.39 |
| Example 5 | 122.7551 | 122.9521 | 0.16 |
| Example 6 | 123.1084 | 122.8133 | -0.24 |
| Example 7 | 122.8123 | 125.8331 | 2.46 |
| Example 8 | 122.7625 | 124.5278 | 1.44 |
| Example 9 | 122.6533 | 123.3219 | 0.55 |
| Example 10 | 122.5864 | 123.2219 | 0.52 |
| Example 11 | 122.7824 | 122.8981 | 0.09 |
| Example 12 | 123.3982 | 122.9721 | -0.35 |
| Example 13 | 123.1114 | 122.5041 | -0.49 |
| Example 14 | 122.9155 | 122.6004 | -0.25 |
| Example 15 | 122.5921 | 122.9215 | 0.26 |
| Example 16 | 123.1521 | 122.9521 | 0.16 |
| Comparative Example 1 | 122.8302 | 126.2513 | 2.79 |
| Comparative Example 2 | 124.5821 | 120.0152 | 3.67 |
| Comparative Example 3 | 123.8571 | 119.5971 | -3.44 |
| Comparative Example 4 | 122.8121 | 125.9512 | 2.56 |

According to Table 3, an absolute value of the volume change ratio of the unit cell for each of Examples 1 to 16 is less than or equal to 2.5%. This demonstrates that the positive electrode active materials prepared according to the present invention have more excellent structural stability. Therefore, the sodium-ion batteries prepared using the positive electrode active materials show better performance.

All technical features of the above-mentioned embodiments may be combined in any way. In order to keep the description concise, not all possible combinations of the technical features in the above embodiments are described. However, as long as the combinations of these technical features have no contradiction, they should be considered as falling within the scope described in this specification.

The above embodiments merely describe several implementation methods of the present invention and are described in a relatively specific and detailed manner. However, this shall not be interpreted as a limitation on the scope of the present invention patent. It should be noted that, for those skilled in the art, various modifications and improvements may be made without departing from the concept of the present invention. All of these modifications and improvements are within the protection scope of the present invention. Therefore, the protection scope of the present invention patent shall be determined by the appended claims.

**Claims**

1. A positive electrode active material, wherein a chemical formula of the positive electrode active material is $Na_xA_yNi_aFe_bMn_cCu_dA_eO_n$, wherein A is selected from at least one of Zn, Mg, Ca, K, and Li, and the following conditions are satisfied:

(1)

$$0.67 \le x \le 0.85, \ 0.01 \le y \le 0.2, \text{ and } x + y \le 1;$$

(2)

$$0.11 \le a \le 0.33, \ 0.11 \le b \le 0.33, \ 0.33 \le c \le 0.66, \ 0.11 \le d \le 0.33, \ 0 \le e \le 0.1,$$

and a + b + c + d = 1;
(3) n satisfies that an algebraic sum of positive and negative valences in the chemical formula equals zero;

under same values of x, a, b, c, d, and n, a sodium layer spacing in a unit cell of the positive electrode active material is reduced by 0.005 Å - 0.115 Å compared to that of $Na_xNi_aFe_bMn_cCu_dO_n$.

2. The positive electrode active material according to claim 1, wherein $0.001 \le e \le 0.1$.

3. The positive electrode active material according to claim 1, wherein $y > e$.

4. The positive electrode active material according to claim 1, wherein the sodium layer spacing in the unit cell of the positive electrode active material is 3.20 Å - 3.45 Å.

5. The positive electrode active material according to claim 1, wherein a transition-metal layer spacing in the unit cell of the positive electrode active material is 2.03 Å - 2.10 Å.

6. The positive electrode active material according to claim 1, wherein an absolute value of a volume change ratio of the unit cell of the positive electrode active material is less than or equal to 2.5% within a voltage condition of less than or equal to 4.4 V.

7. The positive electrode active material according to claim 1, wherein the positive electrode active material is a single crystal or a secondary particle.

8. A preparation method for the positive electrode active material according to any one of claims 1-7, comprising the following steps:

   preparing a nickel-manganese-iron-copper oxide in a molar ratio of Ni:Fe:Mn:Cu = a:b:c:d, wherein $0.11 \le a \le 0.33$, $0.11 \le b \le 0.33$, $0.33 \le c \le 0.66$, $0.11 \le d \le 0.33$, and a + b + c + d = 1;
   subjecting the nickel-manganese-iron-copper oxide, a sodium source, and a doping source to mixing based on $Na_xA_yNi_aFe_bMn_cCu_dA_eO_n$, $0.67 \le x \le 0.85$, $0.01 \le y \le 0.2$, $0 \le e \le 0.1$, and $x + y \le 1$, and then sintering to obtain the positive electrode active material, wherein the doping source is selected from at least one of a zinc source, a magnesium source, a calcium source, a potassium source, and a lithium source.

9. The preparation method for the positive electrode material according to claim 8, wherein the sodium source is selected from at least one of sodium carbonate, sodium bicarbonate, and sodium hydroxide;

   and/or the zinc source is zinc oxide;
   and/or the magnesium source is selected from at least one of magnesium oxide and magnesium hydroxide;
   and/or the calcium source is selected from at least one of calcium oxide and calcium carbonate;
   and/or the potassium source is selected from at least one of potassium oxide, potassium carbonate, potassium hydroxide, and potassium bicarbonate;
   and/or the lithium source is selected from at least one of lithium oxide, lithium hydroxide, and lithium carbonate.

10. The preparation method for the positive electrode material according to claim 8, wherein in the step of the subjecting the nickel-manganese-iron-copper oxide, the sodium source, and the doping source to the mixing and then the sintering, sintering temperature is 800 °C - 1200 °C, heating rate is 1 °C/min - 5 °C/min, and sintering time is 8 h - 16 h.

11. A positive electrode sheet, comprising a positive current collector and a positive electrode active layer provided on a surface of the positive current collector, and the positive electrode active layer comprises the positive electrode material according to any one of claims 1-7.

12. A sodium-ion battery, comprising the positive electrode sheet according to claim 11.

FIG. 1

FIG. 2

FIG. 3

## INTERNATIONAL SEARCH REPORT

| International application No. |
| --- |
| **PCT/CN2024/101459** |

| A. | CLASSIFICATION OF SUBJECT MATTER |
| --- | --- |

H01M4/525(2010.01)i; H01M10/054(2010.01)i; H01M 4/62(2006.01)i

According to International Patent Classification (IPC) or to both national classification and IPC

| B. | FIELDS SEARCHED |
| --- | --- |

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNTXT, CNKI, Web of Science, ENTXT, EXTXTC, VCN, DWPI: 钠离子电池, 钠层, 碱金属层, 碱金属位, 间距, 过渡金属层, 掺杂, 取代, 锌, 镁, 钙, 钾, 锂, Na, Zn, Mg, Ca, K, Li, sodium?ion batter+, layer+, spacing, transition metal, dop+, subsititut+, zinc, magnesium, calcium, potassium, lithium, site?

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116544417 A (NINGBO RONBAY NEW ENERGY TECHNOLOGY CO., LTD.) 04 August 2023 (2023-08-04)<br>description, embodiment 1 | 1-12 |
| Y | CN 116199275 A (NINGBO RONBAY NEW ENERGY TECHNOLOGY CO., LTD.) 02 June 2023 (2023-06-02)<br>description, paragraphs 23-81, and table 1 | 1, 3-12 |
| Y | CN 116130644 A (JIANGSU MORLUS TECHNOLOGY CO., LTD.) 16 May 2023 (2023-05-16)<br>description, paragraphs 5-15 | 1, 3-12 |
| Y | KR 20200083825 A (DONGGUK UNIVERSITY INDUSTRY-ACADEMIC COOPERATION FOUNDATION) 09 July 2020 (2020-07-09)<br>description, paragraphs 13-51 and 135-138, and figures 2-6 | 1, 3-12 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 August 2024** | **05 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/101459** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2020235909 A1 (INDUSTRY-UNIVERSITY-RESEARCH COOPERATION, FOUNDATION DEPARTMENT, HANYANG UNIVERSITY) 26 November 2020 (2020-11-26)<br>entire document | 1-12 |
| A | CN 112670497 A (CONTEMPORARY AMPEREX TECHNOLOGY CO., LTD.) 16 April 2021 (2021-04-16)<br>entire document | 1-12 |

Form PCT/ISA/210 (second sheet) (July 2022)

**INTERNATIONAL SEARCH REPORT**
**Information on patent family members**

International application No.

**PCT/CN2024/101459**

| Patent document cited in search report | | | Publication date (day/month/year) | Patent family member(s) | | | Publication date (day/month/year) |
|---|---|---|---|---|---|---|---|
| CN | 116544417 | A | 04 August 2023 | CN | 116544417 | B | 19 March 2024 |
| CN | 116199275 | A | 02 June 2023 | None | | | |
| CN | 116130644 | A | 16 May 2023 | None | | | |
| KR | 20200083825 | A | 09 July 2020 | KR | 102161900 | B1 | 06 October 2020 |
| WO | 2020235909 | A1 | 26 November 2020 | KR | 20200132772 | A | 25 November 2020 |
| | | | | KR | 102466222 | B1 | 11 November 2022 |
| CN | 112670497 | A | 16 April 2021 | WO | 2021057457 | A1 | 01 April 2021 |
| | | | | EP | 3972016 | A1 | 23 March 2022 |
| | | | | EP | 3972016 | A4 | 08 February 2023 |
| | | | | US | 2022123299 | A1 | 21 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310825219